# EUROPEAN PATENT APPLICATION

(11) **EP 4 727 152 A1**
(43) Date of publication of application: **15.04.2026**
(21) Application number: 24383097.3
(22) Date of filing: 08.10.2024
(51) Int. Cl.: H04N 25/76, G03F 7/00, H10F 39/00

(54) **SENSOR**

(71) Applicant: IMASENIC ADVANCED IMAGING, S.L., 08930 Barcelona (ES)
(72) Inventor: SCOTT, Andrew, 08010 Barcelona (ES)
(74) Representative: Sonnenberg Harrison Partnerschaft mbB

(57) **Abstract**

A sensor fabricated from a plurality of layers on a semiconductor wafer is described. The sensor comprises a plurality of sensor elements arranged in stitching blocks, wherein the plurality of stitching blocks comprise a plurality of vertically arranged control lines running from a bottom edge of the stitching block in the direction of an oppositely disposed top edge of the stitching block. One of the plurality of vertically arranged control lines terminates between the bottom edge and the top edge and the other ones of the plurality of vertically arranged control lines run from the bottom edge to the top edge and have a swerve at one of the bottom edge or the top edge, such that ones of the plurality of vertically arranged control lines in a first one of the plurality of stitching blocks connect to a displaced one of the vertical lines in a second abutting one of the plurality of stitching blocks. The plurality of stitching blocks further comprise at least one vertically arranged read-out line running from the bottom edge to the top edge, wherein the at least one vertically arranged read-out line in the first one of the plurality of stitching blocks connects to the at least one vertically arranged read-out line in the second abutting one of the plurality of stitching blocks. The plurality of stitching blocks further comprises a plurality of horizontally arranged control lines, running from a right-hand edge to an oppositely disposed left hand edge and being connected to ones of the plurality of vertically arranged control lines.

## Description

### FIELD OF THE INVENTION

The field of the invention relates to a sensor with a plurality of sensor elements arranged in stitching blocks.

### BACKGROUND OF THE INVENTION

Microelectronic circuits are generally made using a process termed photolithography or optical lithography to pattern parts of the microelectronic circuit on a layer (such as a thin film) or on the surface of a semiconductor wafer (also called substrate) 5.

The process using a lithography apparatus is well-known. The process uses light from a light source to project in a step a geometric pattern from a photomask (also called reticle or optical mask) to a photosensitive chemical photoresist layer on the surface of the semiconductor wafer or on the thin film (substrate). Exposure of the photoresist layer to the light causes a chemical change to the exposed parts of the photoresist layer which allows these exposed parts of the photoresist layer to be selectively removed to create the geometric pattern in the photoresist layer.

A series of chemical treatments either etches the exposed part forming the geometric pattern into the material, or enables deposition of a new material, such as metal tracks or lines, on the exposed part in the desired geometrical pattern upon the material underneath the photoresist layer. Subsequently the photoresist layer is removed by chemically altering the remaining photoresist in the photoresist layer such that the photoresist layer no longer adheres to the surface of the thin film or the substrate.

Modern semiconductor wafers are large, and the optical masks or reticles cannot project the geometrical pattern over the whole of the surface of the thin film or the semiconductor wafer at the same time. The geometric patterns to be projected as described above onto the surface of the semiconductor wafer can be highly repetitive and, as a result, it is possible to create a series of geometrical patterns in the reticles which are selectively projected onto the surface of the thin film or the semiconductor wafer. These geometrical patterns will be called blocks in this description. The reticle is located in a stepper machine which "steps" in a subsequent step the reticle over the surface of the thin film or the semiconductor wafer such that selected areas of the photoresist layer are exposed. The light source can be arranged so that only certain blocks are illuminated through the reticle at the required position on the surface of the semiconductor wafer or the thin film. The projection step and the stepping step continue until all of the geometrical patterns have been projected onto the surface of the thin film or the semiconductor layer.

As noted above, in many applications, e.g. X-ray detection, electron detection, industrial, machine vision, photogrammetry or medium format photography, it is necessary to make image sensors on the semiconductor wafer which are larger than the photolithographic field (reticle) produced by the optical mask and used in the manufacturing of microelectronics devices. As the edges of the reticle need to host structures other than the design of the microelectronic circuit, e.g. alignment marks or process control monitoring (PCM) structures, it is necessary to use a special technique to make large area devices as an image sensor. This technique is generally known as "stitching", as the full large area device is formed by "stitching" together several photolithographic exposures, in a seamless way.

The first stitched devices date back to the 1990s, when the manufacturing of VLSI (very large-scale integration) devices was becoming more stable and with a high yield. Although other applications were considered, one of the first applications developed was in the field of imaging. Early examples of imaging devices can be found in the publication by P. P. Suni, "CCD wafer scale integration", Proceedings IEEE International Conference on Wafer Scale Integration (ICWSI). doi:10.1109/icwsi.1995.515446 and later in P.J. Pool, W.A.F. Suske, J.E.U. Ashton, "Design Aspect and Characterisation of EEV Large Area CCDs for Scientific & Medical Applications, SPIE Vol. 1242 Charge-Coupled Devices and Solid-State Optical Sensors (1990), 17-25". All these examples refer to charge-coupled devices (CCD), which were at the time the dominant type of the imaging device.

After CMOS image sensors were invented in the early 1990s, stitching was also applied to this type of devices. The reference patent is US 6194105 B1 which describes a way of making stitched image sensors in a CMOS technology and this method is used by most foundries nowadays for manufacturing the image sensors.

Unfortunately, some types of sensors, even of the size of a full wafer, are not large enough for some applications, e.g. X-ray radiography. It is then necessary to "tile" the sensors together to cover large areas, and the number of tiles necessary in one direction is often larger than two tiles. It is then necessary to make the sensors with a minimum amount of "dead area" on at least three sides in order to match the (three) sides of the sensors together to create the larger area. In this case, the sensor is called "3-side buttable". The "dead area" (i.e. area with no imaging devices) on the buttable sides in a 3-side, or even a 2-side buttable sensors, should be normally smaller than half a pixel, so that when the sensors are butted together, a maximum of one line, i.e. either a column or a row in the sensor, is lost.

There are several methods to make a 3-side buttable sensor. One method is described in Korthout et al., A wafer-scale CMOS APS imager for medical X-ray applications, ISSW 2009, http://www.imagesensors.org/Past%20Workshops/2009%20Workshop/2009%20Papers/07 0_paper_korthout_dalsa_wsc.pdf (downloaded on 18 February 2020) in which it is described that some of the columns in the image sensor host a shift-register for addressing. The presence of the shift-registers in the columns would lead those columns of the image sensor to have reduced sensitivity, but this reduction in sensitivity can be corrected in the final image. The sensor is disclosed in a related patent in US Patent No 7,659,516, which however does not cover any detail on stitching, or how to make the sensor 3-side buttable. The introduction of logic circuitry within the pixel area is similar to what is done also in US Patent No. 7,009,646.

Other patents disclose similar methods. For example, in US 7 737 390 the selective exposure of masks, in this case via masks, is used to create blocks with slightly different design and then allowing all the control logic to be moved to the bottom part of the sensor, thus leaving three sides free from any circuitry. The same result is achieved in US 9 247 169 by using extra control lines and some circuitry integrated directly in the focal plane of the sensor.

Similarly, UK Patent Application GB 2 504 111 teaches an imaging sensor device that comprises a pixel sensor array made up of several stitching blocks, each comprising pixel sensors disposed in at least one row group and having two groups of addressing lines, i.e., a first and second groups of addressing lines. The arrangement of the pixel sensors and the addressing lines in each stitching block is the same. Row addressing circuitry is disposed along an external edge of the array parallel to the rows of pixel sensors and coupled to the pixel sensors using the first group of addressing lines for performing row addressing actions. GB 2 504 111 has so-called "group addressing circuitry" which is also disposed along the same edge of the array and coupled to the pixel sensors using at least some of the second group of addressing lines for performing a group addressing action. The second group of addressing lines have an L-shape or step shape ("swerve").

In GB 2 504 111, each stitching block combines a row addressing action with a group addressing action to select only one row of one row group of one stitching block simultaneously. The first group of addressing lines and the second group of addressing lines are connected to logic gates to enable addressing of the individual pixel sensors in the pixel sensor array. The staggering or swerving of the second group of addressing lines means that these (second group of) addressing lines effectively run diagonally across the sensor array. The imaging sensor device has a plurality of read-out lines which is arranged to provide a signal from a single pixel sensor of each of a plurality of rows in the pixel sensor array when selected by the first and second groups of addressing lines. These read out lines are not staggered (or swerved).

European patent application EP 3 885 832 A1 describes a sensor fabricated from a plurality of layers on a semiconductor wafer and comprising a plurality of sensor elements arranged in blocks having a plurality of vertical read-out lines. The plurality of vertical read-out lines run from a bottom edge in the direction of an oppositely disposed top edge, and a plurality of horizontal select/reset lines run from a right-hand edge to an oppositely disposed left hand edge. A plurality of read-out circuits is connected to the plurality of vertical read-out lines, wherein one of the plurality of vertical read-out lines has a swerve at one of the bottom edges or the top edges, such that one of the vertical read-out lines in a first one of the plurality of blocks connects to a displaced one of the vertical read-out lines in a second abutting one of the plurality of blocks.

In EP 3 885 832 A1, the number of pixels output lines is required to be equal to the number of stitching blocks and results in the length and thus the capacitance of the output lines being different due to the routing that is required. Different length and capacitance of the output lines can impact low pass filtering of the pixel, changing the noise characteristic depending on which stitching block the pixel is within.

The prior art, however, does not disclose a sensor not requiring any logic within a pixel while keeping the length and capacitance of output lines constant for reducing impact on noise characteristic.

### SUMMARY OF THE INVENTION

It is an objective of the present invention to provide an enhanced sensor that overcomes the drawbacks of the prior art.

A sensor fabricated from a plurality of layers on a semiconductor wafer is disclosed in the present document. The sensor comprises a plurality of sensor elements arranged in stitching blocks. The plurality of stitching blocks comprises a plurality of vertically arranged control lines running from a bottom edge of the stitching block in the direction of an oppositely disposed top edge of the stitching block. One of the plurality of vertically arranged control lines terminates between the bottom edge and the top edge. The other ones of the plurality of vertically arranged control lines run from the bottom edge to the top edge and have a swerve at one of the bottom edge or the top edge, such that ones of the plurality of vertically arranged control lines in a first one of the plurality of stitching blocks connect to a displaced one of the vertical lines in a second abutting one of the plurality of stitching blocks. The plurality of stitching blocks further comprise at least one vertically arranged read-out line running from the bottom edge to the top edge. The at least one vertically arranged read-out line in the first one of the plurality of stitching blocks connects to the at least one vertically arranged read-out line in the second abutting one of the plurality of stitching blocks. The plurality of stitching blocks further comprises a plurality of horizontally arranged control lines, running from a right-hand edge to an oppositely disposed left hand edge and being connected to ones of the plurality of vertically arranged control lines.

The term "sensor" refers to a device that detects and measures physical properties such as temperature, pressure, light, or motion. The sensor converts these physical quantities into electrical signals that can be read and interpreted by other devices or systems. Sensors are used in various applications, including automation, robotics, medical devices, and environmental monitoring. Sensors enable real-time data acquisition and feedback, allowing for precise control and analysis.

The term "sensor element" refers to a unit of a digital image sensor such as a pixel which captures light and converts it into an electrical signal. A pixel consists of a photosensitive element, such as a photodiode, which detects light intensity and colour. The pixels are arranged in a pattern such as a grid on the sensor, with each pixel corresponding to a point in the captured image. The resolution of the sensor is determined by the number and distribution of pixels, influencing the detail and quality of the image. High-resolution sensors have more pixels, allowing for greater image clarity and finer detail capture. Pixels in an image sensor are arranged in a grid-like matrix, forming rows and columns. Each pixel corresponds to a specific location in the captured image. Each intersection of a row and a column represents a single pixel.

The term "stitching block" refers to a modular design unit used in the fabrication of integrated circuits such as sensors. These blocks are designed to be repeated and connected seamlessly, or "stitched," across a substrate such as a silicon wafer to create larger, complex circuits. The use of stitching blocks allows for the efficient production of large-scale devices by simplifying the design and manufacturing process. This modular approach enhances scalability, reduces design time, and improves yield. It is particularly useful in the production of image sensors, where precise alignment and integration of multiple blocks are critical for high-resolution performance.

The term "control line" refers to a control line used to manage the operation of individual pixels within a sensor array. A control line can comprise a select line and/or a reset line. The select line and the reset line are the minimum set of lines required for an active pixel, but it is clear that if a pixel requires different control lines, these different control lines could be implemented using the same scheme. Specifically, the select line is used to activate a particular row of pixels, enabling these pixels to be read out. The reset line, on the other hand, is used to clear or reset the charge stored in pixels, preparing the pixels for the next exposure. Together, the select lines and the reset lines are used for the sequential reading and refreshing of pixel data, ensuring accurate image capture and processing. The select lines and the reset lines are integral to the timing and control circuitry of an image sensor, facilitating the orderly operation and high-speed performance necessary for imaging applications. Row select lines activate a particular row of pixels, and column select lines enable the reading of individual pixels within that row.

The term "read-out line" refers to the circuitry that facilitates the transfer of pixel data from pixels of a sensor array to an output stage where an image is created. When a specific pixel is selected using select lines, a read-out line is engaged to access the pixel data from that pixel.

The term "swerve" refers to a change in direction such as a sudden or sharp change in direction, and be for example a curve, diagonal or dogleg.

The length and capacitance of the read-out lines can be kept (substantially) constant with the sensor according to the first aspect, thereby reducing impact on noise characteristic of the sensor. The response time is further the same for all rows of pixels of the sensor, thus avoiding potential image artefacts being generated by the sensor. The requirement known in the art for having the number of read-out lines equal to the number of the stitching blocks vertically arranged adjacent to each other in the sensor is further removed, allowing more flexibility in a stitching plan for manufacturing the sensor. A more conventional read-out approach with a group of rows being read-out at one time is further possible with the sensor.

The sensor elements can be one of 3-transistor pixels, 4-transistor pixels, or more transistor pixels. It will be appreciated that this is not limiting of the invention and the sensor elements can alternatively or additionally be any other type of pixels. It will also be noted that some pixels may "share" transistors and thus the effective number of transistors per pixel can be fractional.

The term "3-transistor pixel" refers to a circuitry comprising a photosensitive element such as a photodiode and three transistors such as Metal-Oxide-Semiconductor Field-Effect Transistors (MOSFET).

The plurality of horizontally arranged control lines can further comprise row select lines and row reset lines and the sensor elements are further connected to one of the row select lines and one of the row reset lines.

The one of the plurality of row select lines, which terminates in one of the stitching blocks, can further be connected to a single one of the vertically arranged select lines.

The sensor can further comprise N stitching blocks and at least N vertically arranged control lines.

The swerve can be a dogleg.

The vertically arranged control lines can further be arranged in at least one group.

The vertically arranged control lines can further be arranged in at least two groups.

The at least two groups can further comprise one of the plurality of vertically arranged control lines terminating between the bottom edge and the top edge.

The sensor can further comprise M groups and at least M vertically arranged read-out lines.

The sensor can further comprise M groups and at least M horizontally arranged control lines.

The use of the sensor according to the invention as an imaging sensor is further disclosed in the present document.

Advantageous aspects and/or embodiments of the present disclosure are the subject matter of the dependent claims. Any and all combinations of at least two features disclosed in the description, the claims, and/or the figures fall within the scope of the present disclosure. In particular, linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

All aspects and/or embodiments as described above may be combined as deemed fit by the skilled person. Further possible implementations of the invention also comprise not explicitly mentioned combinations of any features or aspects and/or embodiments that are described above or below with respect to the exemplary aspects and/or embodiments. For example, the invention could be applied to pixel architectures different from the 3T pixel described here, for example for a 4T or 5T pixel, thus supporting correlated double sampling (CDS) and global shutter. In this case, a person skilled in the art will also add individual aspects as improvements or supplementations to the respective basic form of the invention.

The indefinite article "a(n)" in the present case should not necessarily be understood to be restrictive to exactly one element. Rather, a plurality of elements, such as, for example, two, three or more, can also be provided. Any other numeral used here, too, should not be understood to the effect that there is a restriction to exactly the stated number of elements. Rather, numerical deviations upwards and downwards are possible, unless indicated to the contrary.

### DESCRIPTION OF THE FIGURES

Fig. 1 shows a 3T pixel.
Fig. 2 shows a 4T pixel.
Fig. 3 shows a layout of a 3T pixel for a conventional sensor.
Fig. 4 shows a layout of a 3T pixel for 3-side buttable according to the present invention.
Fig. 5 shows a layout of a topmost pixel of a stitching block according to the present invention.
Fig. 6 shows a layout of a stitching block according to the present invention.
Fig. 7 shows a layout of stitching blocks for a sensor according to the present invention, where the pixel array is made of two repetitions of stitching blocks in both the horizontal and the vertical direction.

### DETAILED DESCRIPTION OF THE INVENTION

The invention will now be described on the basis of the figures. It will be understood that the aspects and/or embodiments of the invention described herein are only examples and do not limit the protective scope of the claims in any way. The invention is defined by the claims and their equivalents. It will be understood that features of one aspect and/or embodiment of the invention can be combined with a feature of a different aspect or aspects and/or embodiments of the invention.

Unless indicated to the contrary, elements that are the same or functionally similarly have been given the same reference signs in the figures. It should also be noted that the illustrations in the figures are not necessarily true to scale.

It will be appreciated that the terminology "top," "bottom," "right," "left," "vertical," "horizontal," "row," and "column" is only used in this document to distinguish the various blocks, metal tracks and circuits and is not intended to have any meaning limited to a particular geometry.

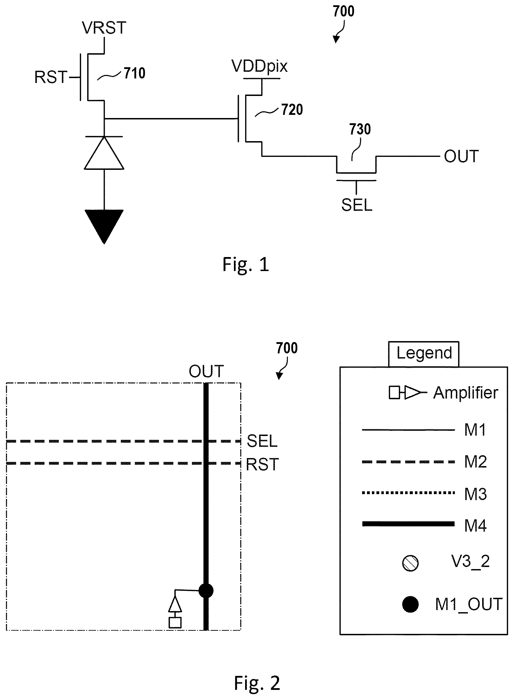

Fig. 1 shows a 3T pixel. For sake of simplicity a 3T (3 transistors) pixel will be considered as the sensor element 700 and a schematic of this 3T pixel is shown in Fig. 1. Fig. 1 shows three MOSFET 710, 720, 730. The reset transistor 710 is connected to a reset RST line for resetting the sensor element 700. The select transistor 730 has a gate connected to a select SEL line for selecting the sensor element 700 for read out through the OUT line. The same or similar readout method could be applied to more complex sensor elements 700 or pixels.

Fig. 2 shows a 4T pixel. The 4T (4 transistor) pixel is basically a 3T pixel as shown in Fig. 1 with an additional transfer transistor 740 connected to a transfer line TX.

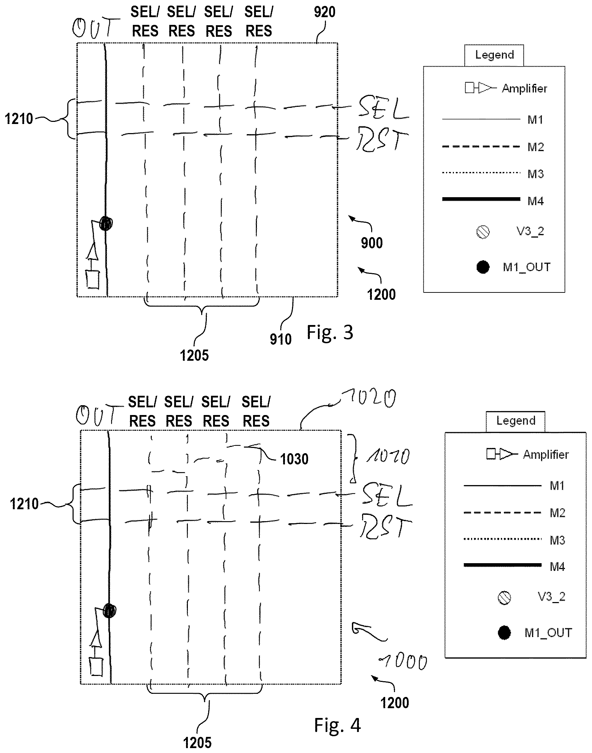

Fig. 3 shows a layout of a 3T pixel for a conventional sensor. A layer of the sensor element 700 with the reset RST line and the select SEL line are shown as horizontal tracks arranged in a row and the OUT line is shown as a vertical track arranged in a column. Layers are marked M1, M2, M3 and M4 and represent different layers of metal tracks formed by different layers of thin films of the sensor. V3_2 corresponds to the via created between layers in the process that connects the metal tracks on the layer M2 to the metal tracks on the layer M3, often called "via 2 to 3". The symbol M1_OUT is used as a shortcut to indicate that combination of the metal tracks and the vias that will connect the local output of a sensor element 700 or pixel on M1 to the output lines on the track M4. Other combinations of the metal layers are, of course, possible.

These sensor elements 700 are read in a so-called "rolling shutter" fashion. The basic idea of the so-called "rolling readout" is that, at any one time, one of the rows in the sensor is selected for readout. In the sensor, the RST and SEL lines of all the sensor elements 700 in the same row are connected together and the OUT lines of all the sensor elements 700 in the same column are connected together. In this way, the readout of the sensor element 700 is done by generating a SEL signal for one row in which the sensor elements 700 are located. This SEL signal is connected - in this example - to the gates of the select transistors 730 in the sensor element 700 activating all the corresponding select transistors 730 in one row and connecting all the sensor elements 700 in that row to their corresponding OUT line. No other pixel in that column is connected to the OUT line, as the values of the select SEL are low for all the other rows, and so that the voltage appearing on this OUT line depends only on the amount of charge in the photodiode of that connected sensor element 700 in the selected row. At the end of the readout, all of the sensor elements 700 in that selected row are reset by activating the RST transistors 710 in the sensor elements 700 in that row. The pixels in that row can now start integrating a next frame, while the control moves to the following row and the method for readout is repeated until all of the rows have been read. In the following row, the readout values on the correspond OUT line correspond to the amount of charge on the photodiode of the sensor element or pixel connected in the following row.

This arrangement with the horizontal control (RST and SEL) signals and the vertical output lines in the column is standard in the art, and in a conventional (prior art) sensor, row drivers for applying the RST and SEL signal to the sensor elements 700 in the row would be located on the left and/or right side of the array of sensor elements 700, with the output amplifier and related circuitry being at the bottom of the array of sensor elements 700. The row drivers take some space on the semiconductor 5, which, although not huge, is normally equivalent to at least a few pixels, even for the sensor with large pixels (e.g. > 50 µm). It is thus impossible to butt the sensors right and left as the gap between the sensors would be otherwise too big.

One solution to this problem of butting the sensors on the right and the left, as well as at the top (where normally there is not much circuitry, even in a conventional sensor), is to move the control circuitry for the row to the bottom of the sensor, so that the problem becomes one of how to address the horizontal row with the RST and/or SEL signals that come from the bottom of the sensor.

Fig. 4 shows a layout of a 3T pixel for 3-side buttable according to the present invention. In order to make the sensor 1200 3-side buttable, the layout of each individual sensor element 900 is modified as shown in Fig. 4. This layout of Fig. 4 can be compared to the prior art layout in Fig. 3, but it can be seen that vertical lines SEL/RES are added to the exiting OUT line. The vertical lines SEL/RES run from the bottom edge 910 to the top edge 920 of the array of the sensor elements 900. The number of vertically arranged control lines 1205 is increased. The number of vertically control lines 1205 will need to be (at least) equal to the number of stitching blocks 1300 of the sensor 1200 in the vertical direction in the sensor 1200.

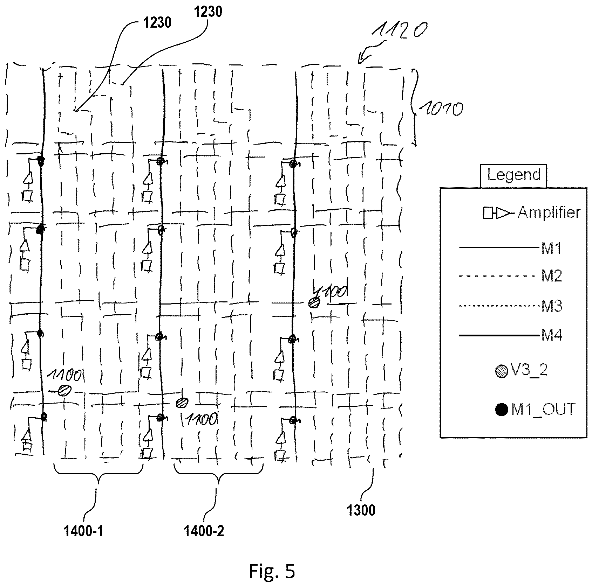

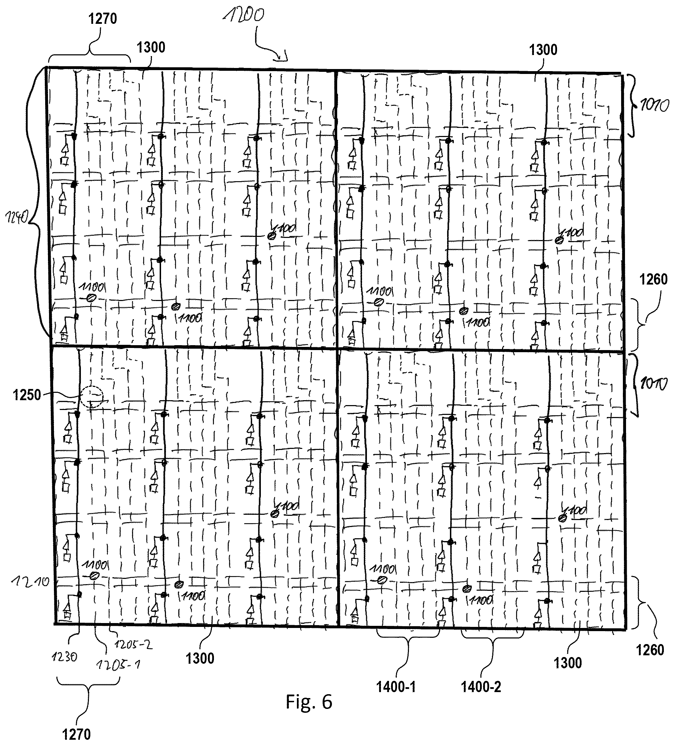

Fig. 5 shows a layout of a topmost sensor element 1000 of a stitching block 1300 according to the present invention. The layout of the topmost sensor element 1000 in every column of a stitching block 1300 of the sensor 1200 will be modified at the top edge 1020 as shown in Fig. 5. In this case three of the four vertically arranged control lines 1205 make a swerve such as a dogleg 1030 just before the top edge 1020 of the topmost sensor element 1000. The sensor elements 1000 will then be arranged in the stitching block 1300 as shown in Fig. 6. The dogleg 1030 is created using the geometrical pattern in a reticle for the stitching block 1300 at the top sensor element 1000 of the columns of the sensor 1200. It will be appreciated that the design of the dogleg 1030 is merely one non-limiting example of a "swerve" or "deviation" from one vertically arranged select/readout line 1205 to another vertically arranged select/readout line 1205. This swerve could also be implemented by a curve, arc, or diagonal line. It is only required that the vertically arranged select/readout lines 1205 do not form a continuous column through the stitched together stitching blocks 1300 and that one end of a vertically arranged select/readout line 1205 in one stitching block 1300 is positioned where the other end of the vertically arranged select/readout line 1205 starts in the following stitching block 1300. It will be appreciated that the dogleg design of the swerve will be the most efficient in the use of space.

Fig. 6 shows a layout of a stitching block 1300 according to the present invention. It will be noticed that V3_2 vias 1100 to connect the vertical M3 lines to the horizontal M2 lines are placed in one and only one sensor element 700 in every column and in every row. In this way, each of the vertically arranged control lines 1205 has a unique correspondence to a horizontally arranged control line 1210, and in each stitching block 1300, the rows can be uniquely addressed. In the case that the number of rows is not equal to the number of columns, it will be possible to provide extra or less vertically arranged control lines 1205 and place the vias 1100 accordingly. Fig. 6 only shows the case of a square block for sake of simplicity, but this is not a design limitation.

It will be observed that in each column, the leftmost vertically arranged control line 1205-1 does not reach the topmost column edge 1120 of the stitching block 1300.

Fig. 7 shows a layout of stitching blocks 1300 for a sensor 1200 according to the present invention, where the pixel array is made of two repetitions of stitching blocks 1300 in both the horizontal and the vertical direction. The sensor 1200 or pixel array is made of 2x2 stitching blocks. The edges of the stitching blocks 1300 are marked with thick lines, but it will be appreciated these thick lines are not physical lines and are merely added to make it easy to identify the single ones of the stitching blocks 1300.

A leftmost vertically arranged select line 1205-1 in each one of the stitching blocks 1300 terminates within the stitching block 1300 at a location 1250 between the topmost horizontally arranged control line 1210 and a top edge 1020 of the stitching block 1200. This leftmost vertically arranged select line 1205-1 will enable selection of all of the sensor elements 700 in the bottom row 1260 of the stitching block 1300 addressed by the bottom horizontally arranged select line 1210 in every one of the stitching blocks 1300. The sensor elements 700 selected by the leftmost vertically arranged select line 1205-1 can then be read-out using the read-out line 1230. The sensor elements 700 in the left column 1270 of the bottom left stitching block 1300 will be connected to the read-out line 1230 and the sensor elements 700 in the left column 1270 of the top left stitching block will be connected to the read-out line 1230 of the top left stitching block 1300 which is connected to the read-out line 1230 of the bottom left stitching block 1300.

The leftmost vertically arranged select line 1205-1 of the top left stitching block 1300 terminates at a location 1250 within the stitching block 1300 and will select all of the sensor elements 700 in the bottom row 1260 of the top left stitching block 1300 addressed by the bottom horizontally arranged select line 1210 of the top left stitching block, then connecting the sensor elements 700 to the readout line 1230. The leftmost vertically arranged select line 1205-1 of the top left stitching block 1300 is connected to the second left vertically arranged select line 1205-2 of the bottom left stitching block 1300. In this example, the leftmost vertically arranged select line 1250-1 of the bottom left stitching block 1300 selects one row in the bottom left stitching block 1300 and the second left vertically arranged select line 1250-2 selects one row in the top left stitching block 1300, and the sensor elements 700 selected are read out on the one common read-out line 1230 in this simple example.

The number of rows which can be read at the same time is independent of the stitching size N(vertical)xM(horizontal). The number of select lines 1205-1 per pixel is at least N vertical lines such all rows can be addressed.

By avoiding a physical connection of neighbouring rows, it means that if one of the control lines is failing or lost, then multiple one of the adjoining rows are also not lost. The loss of multiple rows, and/or multiple columns, would almost certainly mean that the sensor would be considered not to be working. As any failing line is separated by one stitching block, the defects would only be of single failing lines, something which is normally acceptable. As long as the number of acceptable single failing lines on the sensor is not too large and is within specifications, the sensor would pass the selection criteria, thus improving the fabrication yield. It will be appreciated that this is an improvement also over non-stitched sensors, in which, whenever multiple ones of the lines are selected, the multiple lines are neighbours. The skilled person will appreciate that the same technique described in this document could then be applied to non-stitched sensors as well in order to increase the yield of fast sensors.

In the figures, the horizontal lines in the rows of the sensor 1200 are shown to be complete and go uninterrupted from a right-hand vertical edge of the stitching block 1300 to the left-hand vertical edge of the stitching block 1300 so that the rows traverse all of the stitching blocks 1300 in an uninterrupted manner across the entire sensor 1200. This can be done but it is not necessary as the horizontal lines could terminate before the right edge of the stitching block 1300. No special technique would be needed to do this, as the stitching blocks 1300 will remain identical. It will be up to the design of the microelectronic circuit to decide whether it is better to break or not the horizontal lines at the edge of every stitching block 1300.

### Reference signs

- 5: Semiconductor wafer/thin film
- 700: Sensor element
- 710: Reset transistor
- 720: Transistor
- 730: Select transistor
- 740: Transfer transistor
- 900: Sensor element
- 910: Bottom edge
- 920: Top edge
- 1000: Sensor element
- 1010: Bottom edge
- 1020: Top edge
- 1030: Dogleg
- 1100: Via
- 1120: Topmost column edge
- 1200: Pixel array
- 1205: Vertically arranged control line
- 1210: Horizontally arranged control line
- 1230: Read-out line
- 1240: Topmost pixel
- 1250: Location
- 1260: Bottom row
- 1270: Left column
- 1300: Stitching block
- 1400: Group

## Claims

1. A sensor (1200) fabricated from a plurality of layers on a semiconductor wafer (5) and comprising a plurality of sensor elements (700) arranged in stitching blocks (1300), wherein the plurality of stitching blocks (1300) comprise
a plurality of vertically arranged control lines (1205-1, 1205-2) running from a bottom edge (1010) of the stitching block (1300) in the direction of an oppositely disposed top edge (1020) of the stitching block (1300), wherein
one of the plurality of vertically arranged control lines (1205-1) terminates between the bottom edge (1010) and the top edge (1020); and
the other ones of the plurality of vertically arranged control lines (1205-2) run from the bottom edge (1010) to the top edge (1020) and have a swerve (1030) at one of the bottom edge (1010) or the top edge (1020), such that ones of the plurality of vertically arranged control lines (1205-2) in a first one (1300-1) of the plurality of stitching blocks (1300) connect to a displaced one of the vertical lines (1205-1) in a second abutting one (1300-2) of the plurality of stitching blocks (1300);
at least one vertically arranged read-out line (1230) running from the bottom edge (1010) to the top edge (1020), wherein the at least one vertically arranged read-out line (1230) in the first one (1300-1) of the plurality of stitching blocks (1300) connects to the at least one vertically arranged read-out line (1230) in the second abutting one (1300-2) of the plurality of stitching blocks (1300); and
a plurality of horizontally arranged control lines (1210), running from a right-hand edge to an oppositely disposed left hand edge and being connected to ones of the plurality of vertically arranged control lines (1210).

2. The sensor (1200) according to claim 1, wherein the sensor elements (700) are one of 3-transistor pixels, 4-transistor pixels, and 5-transistor pixels.

3. The sensor (1200) according to claim 1 or 2, wherein the plurality of horizontally arranged control lines (1210) comprise row select lines and row reset lines and wherein the sensor elements (700) are connected to one of the row select lines and one of the row reset lines.

4. The sensor (1200) according to any of the above claims, wherein the one of the plurality of row select lines (1205-1) which terminates in one of the stitching blocks (1300) is connected to a single one of the vertically arranged select lines (1210).

5. The sensor (1200) according to any of the above claims, wherein there are N stitching blocks and at least N vertically arranged control lines (1205-1, 1205-2).

6. The sensor (1200) according to any of the above claims, wherein the swerve is a dogleg (1030).

7. The sensor (1200) according to any of the above claims, wherein the vertically arranged control lines (1205-1, 1205-2) are arranged in at least one group (1400-1)

8. The sensor (1200) according to any of the above claims, wherein the vertically arranged control lines (1205-1, 1205-2) are arranged in at least two groups (1400-1, 1400-2).

9. The sensor (1200) according to any of claim 8, wherein the at least two groups (1400-1, 1400-2) comprise one of the plurality of vertically arranged control lines (1205-1) terminating between the bottom edge (1010) and the top edge (1020).

10. The sensor (1200) according to one of claims 7 to 9, wherein there are M groups (1400) and at least M vertically arranged read-out lines (1230).

11. The sensor (1200) according to one of claims 7 to 10, wherein there are M groups (1400) and at least M horizontally arranged control lines (1210).

12. Use of the sensor (1200) of any of the claims 1 to 11 as an imaging sensor.
